# EUROPÄISCHE PATENTSCHRIFT

(11) **EP 1 189 038 B1**
(45) Veröffentlichungstag und Bekanntmachung des Hinweises auf die Patenterteilung: **24.05.2006**
(21) Anmeldenummer: 00120003.9
(22) Anmeldetag: 14.09.2000
(51) Int. Cl.: G01F 1/84

(54) **Verfahren zum Biegen von Messrohren**
Method of bending measuring tubes
Procédé pour courber des tubes de mesure

(43) Veröffentlichungstag der Anmeldung: 20.03.2002
(73) Patentinhaber: Endress + Hauser Flowtec AG, 4153 Reinach BL 1 (CH)
(72) Erfinder: Bitto, Ennio, CH-4147 Aesch (BL) (CH); Kiefer, Ruben, CH-4102 Binningen (CH)
(74) Vertreter: Andres, Angelika Maria

(56) Entgegenhaltungen:
- EP-A- 0 659 500
- PATENT ABSTRACTS OF JAPAN vol. 1995, no. 09, 31. Oktober 1995 (1995-10-31) & JP 07 148834 A (SEKISUI CHEM CO LTD), 13. Juni 1995 (1995-06-13)
- PATENT ABSTRACTS OF JAPAN vol. 017, no. 053 (M-1361), 3. Februar 1993 (1993-02-03) & JP 04 265730 A (ARAI PUMP MFG CO LTD), 21. September 1992 (1992-09-21)

## Beschreibung

Die Erfindung betrifft ein Verfahren zum Biegen von mindestens einem Meßrohr eines Coriolis-Massedurchflußaufnehmers.

Derartige Massedurchflußaufnehmer lassen sich anhand der Form des Meßrohrs oder der Meßrohre in zwei Klassen einteilen, nämlich Massedurchflußaufnehmer mit mindestens einem geraden Meßrohr und solche mit mindestens einem gebogenen Meßrohr. Bei Massedurchflußaufnehmern mit gebogenen Meßrohren sind für die Erfindung diejenigen von Interesse, deren Meßrohre in einer Ebene gebogen sind, d.h. bei denen die jeweilige Achse der Meßrohre in dieser Ebene liegen.

Derartige Meßrohre sind z.B. U-förmig gebogen (vgl. die US-A 53 94 758) oder nur sehr flach gebogen (vgl. die US-A 57 96 011) oder nach der älteren EP-Anmeldung 00 11 0091.6 V-förmig gebogen. EP 659 500 offenbart die Verwendung eines Stützkörpers oder alternativ einer erstarrenden Flüssigkeit zur Herstellung von Wärmetauschernohren. JP 7148834 und JP 4265730 beschreiben das Biegen eines Rohres mittels eines biegsamen Stützkörpers.

Derartige in einer Ebene gebogene Meßrohre, die einen Innen- und einen Außen-Durchmesser aufweisen, lassen sich in die gewünschte Form mittels einer zweiteiligen Pressform biegen, die an die gewünschte Form angepasst ist.

Überlicherweise sind zu biegende Rohre, die hierzu meist erhitzt werden, mit einem möglichst inkrompressiblen Füllstoff zu füllen, der sicherstellt, dass die Form des Querschnitts, meist also ein entsprechender KreisQuerschnitt, nach dem Biegen möglichst unverändert erhalten geblieben ist.

Es hat sich gezeigt, dass dieses übliche Verfahren beim Biegen von Meßrohren für Coriolis-Massedurchflußaufnehmer allein mit einem einzigen inkompressiblen Füllstoff nicht ausreicht, um die erforderliche hohe mechanisch/geometrische Genauigkeit der Biegung und der gebogenen Meßrohre zu erzielen.

Ferner ist es aus Gründen der Fertigungsrationalisierung unbedingt erforderlich, dass die gebogenen Meßrohre hinsichtlich ihrer Länge nicht mehr bearbeitet, insb. gekürzt, werden müssen. Es soll also die Länge des geraden, ungebogenen Meßrohrs für eine Fertigungscharge fest vorgegeben werden können, und die gebogenen Meßrohre haben dann alle eine einheitliche, entsprechend verkürzte Endlänge.

Zur Lösung dieser Probleme besteht die Erfindung daher in einem Verfahren zum Biegen eines Meßrohrs für einen Coriolis-Massedurchflußaufnehmer in eine gewünschte Form mittels eines Rohrstücks von vorgegebener Länge und mittels einer zweiteiligen Pressform, die an das einen Innen-Durchmesser und einen Außen-Durchmesser aufweisende Meßrohr und die gewünschte Form angepasst ist, mit folgenden Schritten:
- in das Rohrstück wird ein biegsamer Stützkörper gesteckt, der in der hage sein muß, der Verbiegung des Rohrstücks zu folgen,
   -- der in einem ersten Ende des Rohrstücks so befestigt wird, dass das Ende verschlossen wird, und
   -- von dem ein maximaler Außen-Durchmesser kleiner als der Innen-Durchmesser des Rohrstücks ist,
- das Rohrstück wird mit einer Flüssigkeit gefüllt und diese danach vollständig erstarren gelassen,
- das mit dem Stützkörper und mit der erstarrten Flüssigkeit gefüllte Rohrstück wird in die geöffnete Pressform gelegt,
- die Pressform wird geschlossen und dadurch das Rohrstück in die gewünschte Form gebogen,
- die Pressform wird geöffnet und das gebogenen Rohrstück entnommen, und
- die erstarrte Flüssigkeit wird schmelzen gelassen und danach der Stützkörper sowie die geschmolzene Flüssigkeit aus dem gebogenen Rohrstück entfernt.

Nach einer ersten bevorzugten Ausgestaltung der Erfindung wird eine Flüssigkeit verwendet, die bei einer Temperatur kleiner 280 °C erstarrt.

Nach einer ersten bevorzugten weiteren Ausgestaltung hiervon wird geschmolzenes Wismut verwendet; in zweiter weiterer bevorzugter Ausgestaltung erstarrt die Flüssigkeit bei einer Temperatur kleiner 50 °C.

Nach weiteren bevorzugten Ausgestaltungen hiervon wird als Flüssigkeit Wood-Metall oder eine wässrige Lösung, insb. Wasser selbst, oder ein Wachs oder ein Öl verwendet.

Nach einer ersten bevorzugten Ausgestaltung der Erfindung wird als Stützkörper eine Spiralfeder verwendet, die bevorzugt mittels Abstandsringen im Rohrstück zentriert wird; In beiden Fällen wird bevorzugt eine Spiralfeder mit Windungen verwendet, die aneinander liegen.

Es hat sich in überraschender Weise gezeigt, dass die gemeinsame Verwendung einer Flüssigkeit zusammen mit dem Stützkörper ein hochgenaues Biegen von Meßrohren von Coriolis-Massedurchflußaufnehmern ermöglicht.

Da der Stützkörper nach einem Merkmal der Erfindung einen maximalen Durchmesser hat, der kleiner als der Innen-Durchmesser des Meßrohrs ist, kann der Stützkörper nach dem Biegen aus dem Meßrohr leicht nicht herausgezogen werden, nachdem die erstarrte Flüssigkeit wieder flüssig geworden ist.

Die hohe Genauigkeit nach dem Biegen, also der davon völlig unbeeinflusste Querschnitt des Meßrohrs im Biegebereich, lässt sich nach Ansicht der Erfinder darauf zurückführen, dass die erstarrte Flüssigkeit zwar als Füllstoff den Hauptanteil zu dieser hohen Genauigkeit beiträgt, dass jedoch der Stützkörper eine dünne Schicht erstarrter Flüssigkeit trägt, die zwischen der Innenwand des Meßrohrs und dem Stützkörper liegt, und dass dies den restlichen Anteil zur hohen Genauigkeit beiträgt.

Die Erfindung wird nun anhand der Figuren der Zeichnung näher erläutert, in der aufeinanderfolgende Stufen eines Verfahrens nach der Erfindung als Ausführungsbeispiel dargestellt ist. Funktionsgleiche Teile sind in unterschiedlichen Figuren mit denselben Bezugszeichen versehen, jedoch in nachfolgenden Figuren nur dann wiederholt, wenn es sinnvoll erscheint.
- Fig. 1: zeigt in Draufsicht ein zu biegendes Rohrstück,
- Fig. 2: zeigt in Draufsicht einen Stützkörper,
- Fig. 3: zeigt in Draufsicht das Rohrstück der Fig. 1 mit dem eingesteckten Stützkörper der Fig. 2,
- Fig. 4: zeigt in Draufsicht das Rohrstück der Fig. 3, in das eine Flüssigkeit eingefüllt wird,
- Fig. 5: zeigt in Draufsicht schematisch eine geöffnete Pressform,
- Fig. 6: zeigt in Draufsicht schematisch die geöffnete Pressform der Fig. 5 mit dem die erstarrte Flüssigkeit und den Stützkörper enthaltenden eingelegten Rohrstück,
- Fig. 7: zeigt in Draufsicht schematisch die geschlossene Pressform der Fig. 6 und das durchs Schließen gebogenen Rohrstück, und
- Fig. 8: zeigt in Draufsicht schematisch die zur Herausnahme des gebogenen Rohrstücks wieder geöffnete Pressform.

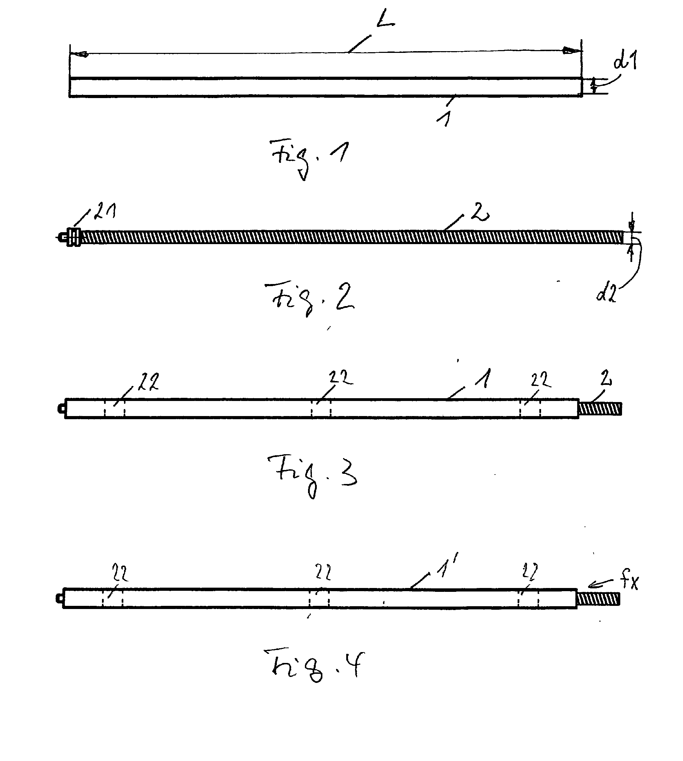

In Fig. 1 ist in Draufsicht ein Rohrstück 1 schematisch dargestellt, das von einer nicht gezeigten geraden Rohrstange mit einer gewünschten Länge L abgeschnitten worden ist. Die Länge L ergibt sich aus der nach dem Biegen gewünschten Länge des als Meßrohr zu verwendenden gebogenen Rohrstücks in einfacher Weise. Das Rohrstück 1 hat einen Innen-Durchmesser d1 und ist üblicherweise aus einem Edelstahl hergestellt.

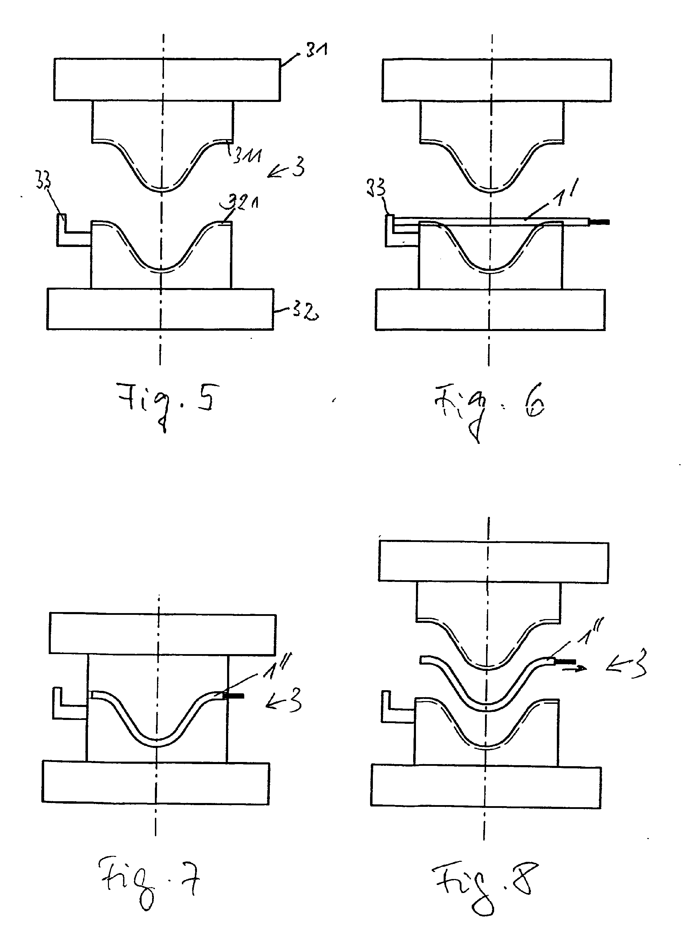

In Fig. 2 ist in Draufsicht ein biegsamer Stützkörper 2 dargestellt, der länger ist als die Länge L des Rohrstücks 1 von Fig. 1. Der Stützkörper 2 hat einen maximalen Außen-Durchmesser d2, der kleiner als der Innen-Durchmesser d1 des Rohrstücks 1 ist. An einem Ende des Stützkörpers 2 ist ein Verschluß 21 angeschraubt, der das Rohrstück 1 zu verschließen geeignet ist.

Es sind aber auch andere Formen von Stützkörpern möglich; diese müssen lediglich in der Lage sein, der Verbiegung des Rohrstücks zu folgen und dabei ihre Querschnittsform sowie den im noch nicht gebogenen Zustand vorhandenen Abstand zwischen Innenwand des Rohrstücks und dem Stützkörper beizubehalten.

In Fig. 3 ist in Draufsicht das Rohrstück 1 dargestellt, nachdem der Stützkörper 2 in es eingesteckt worden ist. Der Verschluss 21 befindet sich nun an einem Ende des Rohrstücks 1, und an seinem anderen Ende steht ein dem den Verschluss 21 tragenden Ende gegenüberliegendes Ende des Stützkörpesr 2 wegen dessen größerer Länge als die Länge L des Rohrstücks 1 hervor. Somit ist das Rohrstück 1 an dem erwähnten Ende flüssigkeitsdicht verschlossen worden.

In Fig. 4 ist in Draufsicht das Rohrstück wieder mit eingestecktem Stützkörper 2 dargestellt; nun ist jedoch durch den Pfeil veranschaulicht, dass der Zwischenraum zwischen Rohrstück und Stützkörper und, falls dieser hohl ist, auch er selbst mit einer Flüssigkeit fx aufgefüllt worden ist. Danach wird die Flüssigkeit fx vollständig erstarren gelassen. In diesem Zustand wird das Rohrstück mit 1' bezeichnet.

In den Fig. 3 und 4 ist noch gestrichelt dargestellt, dass nach einer bevorzugten Ausgestaltung der Stützkörper 2 mittels Abstandsringen 22 im Rohrstück 1 zentriert werden kann.

In den Fig. 2 bis 4 ist jeweils als bevorzugter Stützkörper 2 eine Spiralfeder dargestellt; ihre Windungen liegen vorzugsweise aneinander.

Als Flüssigkeit fx eignet sich jede Flüssigkeit, deren Erstarrungs-Temperatur einige hundert Celsiusgrade niederer ist als die Schmelztemperatur des Rohrstücks 1 und des Stützkörpers 2. Es können Metalle mit in diesem Sinne niederem Schmelzpunkt, wie z.B. das genannte Wismut oder das genannte Wood-Metall, aber auch wässrige Lösungen, insb. Wasser selbst, oder organische Verbindungen, wie z.B. Wachse oder Öle, verwendet werden.

In Fig. 5 ist in Draufsicht schematisch eine geöffnete Pressform 3 dargestellt, die ein Oberteil 31 und ein Unterteil 32 umfasst. Die Pressform 3 ist an den Außen-Durchmesser und die gewünschte Form des gebogenen Rohrstücks 1 angepasst.

Hierzu befindet sich im Oberteil 31 eine erste Rinne 311 und im Unterteil 32 eine zweite Rinne 321. Beide Rinnen haben einen Querschnitt in der Form einer Halbkreisfläche, deren Durchmesser gleich dem Außen-Durchmesser des Rohrstücks 1 ist. Der Querschnitt des Oberteils 31 ergänzt, wenn die Pressform geschlossen ist, den Querschnitt des Unterteils 32 zu einer Vollkreisfläche. Am Unterteil ist ein Anschlag 33 für die zu biegenden Rohrstücke 1' angebracht.

Die beiden Rinnen 311, 321 der Pressform 3 und damit die gewünschte Form des gebogenen Rohrstücks enthalten eine Ebene, in der eine Achse des gebogenen Rohrstücks liegt, und sind in dieser Ebene V-artig ausgebildet.

In Fig. 6 ist in Draufsicht schematisch die geöffnete Pressform der Fig. 5 dargestellt, auf deren Unterteil das den Stützkörper 2 und die erstarrte Flüssigkeit fx enthaltende Rohrstück 1' von Fig. 4 bis zum Anschlag 33 eingelegt ist.

In Fig. 7 ist in Draufsicht schematisch die geschlossene Pressform 3 der Fig. 6 mit dem durchs Schließen gebogenen Rohrstück dargestellt, das nun mit 1" bezeichnet ist. Es ist ersichtlich, dass, wie bereits oben bei der Erläuterung der der Erfindung zugrunde liegenden Probleme erwähnt wurde, das gebogene Rohrstück 1" durch das Biegen kürzer als die Länge L des geraden Rohrstücks 1 geworden ist.

In Fig. 8 ist schließlich in Draufsicht schematisch die wieder geöffnete Pressform 3 dargestellt, aus der das gebogene Rohrstück 1" im Begriff ist entnommen zu werden. Die erstarrte Flüssigkeit wird schmelzen gelassen und danach der Stützkörper 2 sowie die Flüssigkeit fx entfernt, was durch den eingezeichneten Pfeil angedeutet ist. Das gebogene Rohrstück 1" kann nun ohne jede Bearbeitung als Meßrohr weiterverwendet werden.

## Patentansprüche

1. Verfahren zum Biegen eines Meßrohrs für einen Coriolis-Massedurchflußaufnehmer in eine gewünschte Form mittels eines Rohrstücks (1) von vorgegebener Länge (L) und mittels einer zweiteiligen Pressform (3), die an das einen Innen-Durchmesser (d1) und einen Außen-Durchmesser aufweisende Meßrohr und die gewünschte Form angepasst ist, mit folgenden Schritten:
- in das Rohrstück (1) wird ein biegsamer Stützkörper (2) gesteckt, der in der hage sein muß, der Verbiegung des Rohrstücks zu folgen,
-- der in einem ersten Ende des Rohrstücks so befestigt wird, dass das Ende verschlossen wird, und
-- von dem ein maximaler Außen-Durchmesser (d2) kleiner als der Innen-Durchmesser (d1) des Rohrstücks ist,
- das Rohrstück (1) wird mit einer Flüssigkeit (fx) gefüllt und diese danach vollständig erstarren gelassen,
- das mit dem Stützkörper und mit der erstarrten Flüssigkeit gefüllte Rohrstück (1') wird in die geöffnete Pressform (3) gelegt,
- die Pressform wird geschlossen und **dadurch** das Rohrstück in die gewünschte Form gebogen,
- die Pressform wird geöffnet und das gebogenen Rohrstück (1") entnommen, und
- die erstarrte Flüssigkeit wird schmelzen gelassen und danach der Stützkörper (2) sowie die geschmolzene Flüssigkeit (fx) aus dem gebogenen Rohrstück (1") entfernt.

2. Verfahren nach Anspruch 1, bei dem eine Flüssigkeit (fx) verwendet wird, die bei einer Temperatur kleiner 280 °C erstarrt.

3. Verfahren nach Anspruch 2, bei dem als Flüssigkeit (fx) geschmolzenes Wismut verwendet wird.

4. Verfahren nach Anspruch 2, bei dem eine Flüssigkeit (fx) verwendet wird, die bei einer Temperatur kleiner 50 °C erstarrt.

5. Verfahren nach Anspruch 4, bei dem als Flüssigkeit (fx) geschmolzenes Wood-Metall verwendet wird.

6. Verfahren nach Anspruch 4, bei dem als Flüssigkeit (fx) eine wässrige Lösung, insb. Wasser, verwendet wird.

7. Verfahren nach Anspruch 4, bei dem als Flüssigkeit (fx) ein Wachs oder ein Öl overwendet wird.

8. Verfahren nach Anspruch 1, bei dem als Stützkörper (2) eine Spiralfeder verwendet wird.

9. Verfahren nach Anspruch 8, bei dem die Spiralfeder mittels Abstandsringen (22) im Rohrstück (2) zentriert wird.

10. Verfahren nach Anspruch 8, bei dem eine entspannte Spiralfeder mit Windungen verwendet wird, die aneinander liegen.

## Claims

1. A method for bending a measuring tube for a Coriolis-type mass flow sensor into a desired shape by means of a tube section (1) of predetermined length (L) and by means of a two-part pressing mould (3) which is adapted to the measuring tube having an internal diameter (d1) and an external diameter and to the desired shape, comprising the following steps:
- into the tube section (1) is inserted a flexible supporting body (2) which must be capable of following the deflection of the tube section,
-- which is fixed in a first end of the tube section such that the end is closed, and
-- of which a maximum external diameter (d2) is smaller than the internal diameter (d1) of the tube section,
- the tube section (1) is filled with a fluid (fx) and this is then allowed to solidify completely,
- the tube section (1') filled with the supporting body and with the solidified fluid is placed in the opened pressing mould (3),
- the pressing mould is closed and the tube section is thereby bent into the desired shape,
- the pressing mould is opened and the bent tube section (1") removed, and
- the solidified fluid is allowed to melt and the supporting body (2) as well as the molten fluid (fx) are then removed from the bent tube section (1").

2. A method according to Claim 1, in which a fluid (fx) is used which solidifies at a temperature lower than 280°C.

3. A method according to Claim 2, in which molten bismuth is used as the fluid (fx).

4. A method according to Claim 2, in which a fluid (fx) is used which solidifies at a temperature lower than 50°C.

5. A method according to Claim 4, in which molten Wood's metal is used as the fluid (fx).

6. A method according to Claim 4, in which an aqueous solution, particularly water, is used as the fluid (fx).

7. A method according to Claim 4, in which a wax or an oil is used as the fluid (fx).

8. A method according to Claim 1, in which a spiral spring is used as the supporting body (2).

9. A method according to Claim 8, in which the spiral spring is centred in the tube section (2) by means of spacing rings (22).

10. A method according to Claim 8, in which an untensioned spiral spring is used with coils which abut one another.

## Revendications

1. Procédé pour le pliage d'un tube de mesure pour un capteur de débit massique selon Coriolis selon une forme souhaitée au moyen d'un morceau de tube (1) vers une longueur L prédéterminée et au moyen d'un moule à presse (3) en deux parties, qui est adaptée à un tube de mesure présentant un diamètre intérieur (d1) et un diamètre extérieur et qui a la forme souhaitée, avec les étapes suivantes :
- introduction d'un corps de support (2) susceptible d'être plié dans le morceau de tube (1), lequel corps de support est capable de suivre le pliage du morceau de tube,
-- lequel corps de support est fixé à une première extrémité du morceau de tube, de manière à ce que l'extrémité se trouve fermée, et
-- lequel corps de support présentant un diamètre extérieur (d2) maximal inférieur au diamètre intérieur (d1) du morceau de tube,
- le morceau de tube (1) est rempli d'un liquide (fx) et on laisse ledit liquide complètement se solidifier après,
- le morceau de tube (1') rempli avec le liquide solidifié et le corps de support est disposé dans le moule à presse (3) ouvert,
- le moule à presse est fermé et le morceau de tube se trouve ainsi plié selon la forme souhaitée,
- le moule à presse est ouvert et le morceau de tube plié (1") est retiré, et
- on laisse le liquide solidifié fondre, puis le corps de support (2) ainsi que le liquide (fx) fondu sont retirés du morceau de tube (1") plié.

2. Procédé selon la revendication 1, dans lequel on utilise un liquide (fx) qui se solidifie à une température inférieure à 280°C.

3. Procédé selon la revendication 2, dans lequel on utilise du bismuth fondu en tant que liquide (fx).

4. Procédé selon la revendication 2, dans lequel on utilise un liquide (fx) qui se solidifie à une température inférieure à 50°C.

5. Procédé selon la revendication 4, dans lequel on utilise un alliage fondu dit de Wood à base de bismuth en tant que liquide (fx).

6. Procédé selon la revendication 4, dans lequel on a utilisé une solution aqueuse, notamment de l'eau en tant que liquide (fx).

7. Procédé selon la revendication 4, dans lequel on utilise une cire ou une huile en tant que liquide (fx).

8. Procédé selon la revendication 1, dans lequel on utilise un ressort spiral en tant que corps de support (2).

9. Procédé selon la revendication 8, dans lequel le ressort à spirales est centré au moyen d'anneaux de distance (22) dans le morceau de tube (2).

10. Procédé selon la revendication 8, dans lequel on utilise un ressort spiral avec des spires qui se touchent.
